(19) **Europäisches Patentamt**

**European Patent Office**

**Office européen des brevets**

(11) **EP 0 663 233 B1**

(12) **EUROPEAN PATENT SPECIFICATION**

(45) Date of publication and mention
of the grant of the patent:
**12.08.1998 Bulletin 1998/33**

(51) Int. Cl.$^6$: **B01D 53/70**, A62D 3/00

(21) Application number: **95300223.5**

(22) Date of filing: **13.01.1995**

(54) **Treatment of gas mixtures**

Behandlung von Gasmischungen

Traitement de mélanges gazeux

(84) Designated Contracting States:
**DE FR GB IT NL**

(30) Priority: **14.01.1994 GB 9400657**

(43) Date of publication of application:
**19.07.1995 Bulletin 1995/29**

(73) Proprietor: **The BOC Group plc**
**Windlesham Surrey GU20 6HJ (GB)**

(72) Inventors:
• **Timms, Peter Leslie, Dr.**
**Bristol, BS6 7EQ (GB)**

• **Lott, Robert Martin Terence**
**Fareham, Hampshire, PO14 3HE (GB)**

(74) Representative:
**Bousfield, Roger James**
**The BOC Group plc**
**Chertsey Road**
**Windlesham Surrey GU20 6HJ (GB)**

(56) References cited:
**EP-A- 0 384 802**          **DE-A- 3 432 033**

## Description

This invention relates to the treatment of gas mixture and in particular of waste gas streams used in the electronics industry, especially those containing perfluoroalkanes such as hexafluoroethane ($C_2F_6$) and tetrafluoromethane ($CF_4$).

The electronics industry makes extensive use of hexafluoroethane and, to a lesser extent, of tetrafluoromethane, commonly mixed with oxygen, for the plasma etching of semi-conductor devices under reduced pressure. The waste gases pumped out from the etching apparatus generally contain unreacted hexafluoroethane and/or tetrafluoromethane which may be mixed with other gases or vapours, particularly silicon tetrafluoride ($SiF_4$) and carbonyl fluoride ($COF_2$), and which may be diluted with nitrogen used to purge the vacuum pumps associated with the apparatus.

Although hexafluoroethane and tetrafluoromethane can be considered to have low toxicity when released in to the environment, they are "greenhouse" gases with a strong ability to absorb infra-red radiation; in addition, they are believed to persist in the atmosphere for hundreds of years and their long-term effect on the environment is considered to be very deleterious. It is therefore extremely important that both these gases are removed from the waste gases prior to release in to the atmosphere.

A variety of methods are known to remove and/or to destroy most of the environmentally harmful gaseous substances contained in waste gas streams to prevent their release in to the atmosphere. However, hexafluoroethane and tetrafluoromethane present particular problems because they are so chemically inert that they are generally unaffected by, and therefore pass straight through known aqueous scrubbing systems or solid reactant scrubbing devices at ambient temperatures.

Although both gases are known to be destroyed

i) by reaction with either silicon or silica at temperatures in excess of 1000°C, and

ii) by reaction with hydrogen or hydrogen containing gas in a plasma or flame at very high temperatures

very high temperatures are required and, in any event, the reaction products - gaseous silicon tetrafluoride and hydrogen fluoride respectively - must themselves subsequently be scrubbed to avoid release to the atmosphere.

For example, it is known from EP-A-0 384 802 that carbon and nitrogen halides can in general be detoxicated by passing them through a heated packed layer containing one or more of silicon, molybdenum, tungsten, molybdenum silicide and tungsten silicide, and thereafter treating a reaction product with an alkali, for example soda lime.

The present invention is concerned with the provision of a new method for chemically destroying perfluoro-organic compounds including hexafluoroethane and tetrafluoromethane in particular. It will be understood and seen from the examples of the invention that the perfluoro-organic compounds can generally be destroyed in a one-step process.

In accordance with the invention, there is provided a method for the treatment of a gas stream containing one or more perfluoro-organic compounds to remove the perfluoro-organic compound(s) therefrom, which comprises bringing the gas stream in to contact with a sodium or potassium salt providing a source of sodium or potassium ions and with elemental silicon or a silicon alloy at a temperature between 650°C and 1000°C.

The invention is particularly suitable for the destruction of hexafluoroethane and tetrafluoromethane. The method generally converts both of these substances in to non-volatile metal fluorides and elemental carbon or carbon monoxide. However other perfluoroalkanes, for example octafluoroethane, and perfluoroalkenes, perfluoroalkynes or perfluoroaromatic compounds are also destroyed with equal or greater efficiency under the conditions which destroy hexafluoroethane and tetrafluoromethane.

The sodium or potassium salt can usefully comprise an oxo-salt. This is preferably substantially anhydrous and can usefully be sodium or potassium metasilicate ($Na_2SiO_3$ or $K_2SiO_3$); however, other substantially anhydrous sodium or potassium silicate phases can be used also. Further examples of oxo-salts that can usefully be employed are substantially anhydrous sodium or potassium aluminates, sodium or potassium alumino-silicates, sodium or potassium carbonates, sodium or potassium oxalates and sodium or potassium oxides.

It is thought that the mode of reaction of the present invention in the case of hexafluoroethane and anhydrous sodium metasilicate can be illustrated by the following equation:

$$6Na_2SiO_3 + 3Si + 2C_2F_6 \rightarrow 12NaF + 9SiO_2 + 4C \qquad \text{(Equation 1)}$$

and in the case of tetrafluoromethane and anhydrous sodium metasilicate by the following equation:

$$2Na_2SiO_3 + Si + CF_4 \rightarrow 4NaF + 3SiO_2 + C \qquad \text{(Equation 2)}$$

In both cases the reaction products are non-volatile sodium fluoride, silica and carbon. Using sodium oxide the products are sodium fluoride, silica and carbon. Replacement of sodium by potassium salts gives potassium fluoride in place of sodium fluoride but otherwise products are the same as with sodium fluoride.

The sodium or potassium salts may alternatively comprise one or more of a sodium or potassium halide, ie chloride, fluoride or (less usefully) bromide or iodide, or complex fluorides of sodium or potassium, for example sodium aluminium fluoride ($Na_3AlF_6$).

In the case of sodium or potassium halides or complex fluorides, however, it is preferable to employ one or both of calcium oxide and magnesium oxide in conjunction with the sodium or potassium salts.

Furthermore, in the case of sodium or potassium oxo-salts or aluminates, it is preferable also to employ one or both of calcium oxide or magnesium oxide.

The calcium and/or magnesium oxide, preferably in powder or granular form, is added to the mixture of the sodium or potassium salt and the silicon or silicon alloy. They have three main effects. Firstly, they destroy any silicon tetrafluoride, $SiF_4$, which may be formed by direct reaction of hexafluoroethane or tetrafluoromethane with the silicon or silicon alloy, indeed, the addition of calcium oxide or magnesium oxide also has beneficial effects in improving the capacity of the mixture to destroy effluent gases other than hexafluoroethane and tetrafluoromethane. Secondly, there is less undesired sintering of the mixture when held at temperatures in the range 650°C to 1000°C if calcium oxide or magnesium oxide is present in the mixture; these oxides react with silica which is liberated, for example as shown in the equations above in relation to the oxo-salts, to form the corresponding metal silicates. If sodium or potassium aluminate is used, then calcium or magnesium oxides react with the liberated alumina to form metal aluminates. Thirdly, they allow a catalytic cycle to be established as described below.

In the case of sodium chloride and magnesium oxide in particular, it is thought that the main reaction can be represented by the following equation in the case of hexafluoroethane:

$$2C_2F_6 + 3Si + 9MgO + 12NaCl \rightarrow 12NaF + 6MgCl_2 + 3MgSiO_3 + 4C \qquad \text{(Equation 3)}$$

and in the case of tetrafluoromethane:

$$CF_4 + Si + 3MgO + 4NaCl \rightarrow 4NaF + 2MgCl_2 + MgSiO_3 + C \qquad \text{(Equation 4)}$$

Equivalent reactions apply to the use of potassium chloride (or other halide) and calcium oxide together or separately.

It is also thought that the reaction of hexafluoroethane or tetrafluoromethane with a mixture of calcium oxide and/or magnesium oxide and silicon and a sodium salt in accordance with the invention allows a catalytic cycle to be established in which sodium fluoride, for example generated as shown in Equations 1 and 2 above, or added initially, or formed from sodium chloride as shown in Equations 3 and 4 above, permits further reaction of hexafluoroethane or tetrafluoromethane with silicon and calcium or magnesium oxides according to the general equations:

$$2C_2F_6 + 3Si + 9MO + 12NaF \rightarrow 12NaF + 6MF_2 + 3MSiO_3 + 4C \qquad \text{(Equation 5), or}$$

$$CF_4 + Si + 3MO + 4NaF \rightarrow 4NaF + 2MF_2 + MSiO_3 + C \qquad \text{(Equation 6)}$$

(where M = Ca or Mg).

In the case of both Equations 5 and 6, the same amount of sodium fluoride is produced as is consumed, ie the sodium fluoride acts catalytically.

In all cases, a temperature of 730 to 800°C is preferred.

With regard to the silicon or silicon alloy, it is preferred to use elemental silicon itself. The purity is not thought to be particularly important; a normal metallurgical grade of > 97% purity has been found to be suitable. If an alloy is employed, a ferro-silicon alloy or silicon carbide are preferred although both are slightly less effective, weight for weight than silicon itself.

The ability to destroy hexafluoroethane or tetrafluoromethane is generally not affected if the gases are mixed with up to twice their volume of oxygen and only a slight reduction in efficiency occurs if the $O_2{:}C_2F_6$ or $O_2{:}CF_4$ ratio is increased, for example, to 4:1. The oxygen does react with carbon formed as shown in the above equations to form mainly carbon monoxide which readily oxidises to carbon dioxide and can be relatively safely vented to the atmosphere.

For a better understanding of the invention, reference will now be made, by way of exemplification only, to the following examples of the use of the method of the invention.

## Example 1

A stainless steel tube was part filled with a mixture of powder forms of substantially anhydrous sodium metasilicate (dried at 800°C) and silicon in the weight ratio $Na_2SiO_3{:}Si$ of 6:1. The filled part of the tube was heated by an external oven to 770°C. A mixture of gaseous nitrogen (97% by volume), tetrafluoromethane (2% by volume) and oxygen (1% by volume) was passed through the tube at a rate which gave an average residence time for the gases in the filled part of the tube of 5 seconds.

The effluent gases were passed through an infra-red gas cell precalibrated quantitatively to determine $CF_4$ and $SiF_4$ and capable of detecting $COF_2$ and other infra-red active compounds at levels > 20 ppm in the gas stream. The concentration of $CF_4$ found in the effluent gas stream was < 0.03% (< 300 ppm in the gas stream). The concentration of $SiF_4$ varied between 0.1% and 0.05% (between 1000 and 500 ppm in the gas stream) but $COF_2$ and other infra-red active species were below the limit of detection of 0.002% (20 ppm in the gas stream).

Example 2

A stainless steel tube was-part filled with a mixture of powder forms of substantially anhydrous sodium metasilicate (pre-dried at 800°C), calcium oxide {containing < 10% $Ca(OH)_2$} and metallurgical grade silicon. The weight proportions were $Na_2SiO_3$:CaO:Si, 4:3:1. The filled part of the tube was heated by an external oven to 760°C. A mixture of gaseous nitrogen (94% by volume), hexafluoroethane (3% by volume) and oxygen 3% by volume) was passed through the column at a rate which gave an average residence time of the gases in the heated part of the tube of 6 seconds. The effluent gases were passed through an infra-red gas cell in a spectrometer pre-calibrated to quantitatively determine $C_2F_6$ and $CF_4$, and to detect $SiF_4$ at concentrations > 20 ppm. The residual concentration of $C_2F_6$ in the effluent was < 0.03% (< 300 ppm in the gas stream). The concentrations of $CF_4$ and $SiF_4$ were below the limits of detection of 0.002% (> 20 ppm in the gas stream). No other infra-red active compounds were observed in the effluent gases.

Example 3

A stainless steel tube was part filled with a mixture of powder forms of dry sodium fluoride, calcium oxide {containing < 10% $Ca(OH)_2$} and metallurgical grade silicon. The weight proportions were 6:6:1. The filled part was heated by an external oven to 750°C. A mixture of hexafluorethane (2% by volume) and nitrogen (98% by volume) was passed through the mixture at a rate which gave an average residence for the gases of 20 seconds. The composition of the exhaust gases was monitored as in Example 2 by infrared spectroscopy and the proportion of $C_2F_6$ was found to be < 0.005% by volume, ie > 99.75% of the $C_2F_6$ was destroyed. No gaseous reaction products were present at concentrations > 20 ppm in the exhaust gas.

Example 4

50g of a mixture containing powder forms of dry sodium chloride, calcium oxide {containing < 10% $Ca(OH)_2$} and silicon in a weight ratio 2:6:1 was packed into a stainless steel tube heated by an external furnace to 730°C. A mixture of 2% tetrafluoromethane and 98% nitrogen was passed through the mixture at a rate of 140 $cm^3min^{-1}$ giving an average residence time of the gases of 24 seconds. The composition of the exhaust gases was monitored as in Example 2 by infrared spectroscopy and the proportion of $CF_4$ was found to be < 0.005% by volume, ie > 99.75% of the $CF_4$ was destroyed. No gaseous reaction products were present at concentrations > 20 ppm in the exhaust gas.

**Claims**

1.  A method for the treatment of a gas stream containing one or more perfluoro-organic compounds to remove the perfluoro-organic compound(s) therefrom, which comprises bringing the gas stream in to contact with a sodium or potassium salt providing a source of sodium or potassium ions and with elemental silicon or a silicon alloy at a temperature between 650°C and 1000°C.

2.  A method according to Claim 1 in which the gas stream contains one or both of hexafluoroethane and tetrafluoromethane.

3.  A method according to Claim 1 or Claim 2 in which the sodium or potassium salt is an oxo-salt.

4.  A method according to Claim 1 or Claim 2 in which the sodium or potassium salt is sodium or potassium metasilicate.

5.  A method according to Claim 1 or Claim 2 in which the sodium or potassium salt is one of anhydrous sodium or potassium aluminate, sodium or potassium alumino-silicate, sodium or potassium carbonate, sodium or potassium oxalate and sodium or potassium oxide.

6. A method according to Claim 1 or Claim 2 in which the sodium or potassium salt is one or more of a sodium or potassium halide or complex fluorides of sodium or potassium.

7. A method according to any preceding claim in which one or both of calcium oxide and magnesium oxide are employed in conjunction with the sodium and potassium salts.

8. A method according to any preceding claim which is carried out at a temperature between 730 and 800°C.

9. A method according to any preceding claim in which the silicon is in the form of elemental silicon.

10. A method according to any one of Claim 1 to 8 in which the silicon is present in the form of a silicon alloy.

**Patentansprüche**

1. Verfahren zur Behandlung eines Gasstroms, der eine oder mehr organische Perfluor-Verbindungen enthält, um die organischen Perfluor-Verbindungen aus dem Gasstrom abzuscheiden, wobei der Gasstrom bei einer Temperatur zwischen 650°C und 1000°C in Berührung mit einem Natrium- oder Kaliumsalz, das eine Natrium- bzw. Kaliumionenquelle bildet, und mit elementarem Silizium oder einer Siliziumlegierung in Berührung gebracht wird.

2. Verfahren nach Anspruch 1, wobei der Gasstrom eine oder beide der Verbindungen Hexafluorethan und Tetrafluormethan enthält.

3. Verfahren nach Anspruch 1 oder 2, wobei das Natrium- oder Kaliumsalz ein Oxosalz ist.

4. Verfahren nach Anspruch 1 oder 2, wobei das Natrium- oder Kaliumsalz Natrium- bzw. Kalium-Methasilikat ist.

5. Verfahren nach Anspruch 1 oder 2, wobei das Natrium- oder Kaliumsalz einer der Stoffe wasserfreies Natrium- oder Kaliumaluminat, Natrium-Aluminosilikat, Natrium- oder Kaliumkarbonat, Natrium- oder Kaliumoxalat und Natrium- oder Kaliumoxyd ist.

6. Verfahren nach Anspruch 1 oder 2, wobei das Natrium- oder Kaliumsalz durch eine oder mehr der Verbindungen Natrium- oder Kaliumhalogenid oder Komplexfluoride von Natrium oder Kalium gebildet ist.

7. Verfahren nach einem der vorhergehenden Ansprüche, wobei einer oder beide der Stoffe Kalziumoxyd und Magnesiumoxyd in Verbindung mit den Natrium- und Kaliumsalzen eingesetzt wird.

8. Verfahren nach einem der vorhergehenden Ansprüche, das bei einer Temperatur zwischen 730°C und 800°C ausgeführt wird.

9. Verfahren nach einem der vorhergehenden Ansprüche, wobei das Silizium in Form elementaren Siliziums vorliegt.

10. Verfahren nach einem der Ansprüche 1 bis 8, wobei das Silizium in Form einer Siliziumverbindung vorliegt.

**Revendications**

1. Procédé de traitement d'un courant gazeux contenant un ou plusieurs composés organiques perfluorés pour en éliminer le ou les composés organiques perfluorés, qui comprend la mise en contact du courant gazeux avec un sel de sodium ou de potassium apportant une source d'ions sodium ou potassium et avec du silicium élémentaire ou un alliage de silicium à une température comprise entre 650°C et 1000°C.

2. Procédé suivant la revendication 1, dans lequel le courant gazeux contient de l'hexafluoréthane ou du tétrafluorométhane ou les deux.

3. Procédé suivant la revendication 1 ou la revendication 2, dans lequel le sel de sodium ou de potassium est un oxosel.

4. Procédé suivant la revendication 1 ou la revendication 2, dans lequel le sel de sodium ou de potassium est le métasilicate de sodium ou de potassium.

5. Procédé suivant la revendication 1 ou la revendication 2, dans lequel le sel de sodium ou de potassium est l'un des sels anhydres choisis entre l'aluminate de sodium ou de potassium, l'aluminosilicate de sodium ou de potassium, le carbonate de sodium ou de potassium, l'oxalate de sodium ou de potassium et l'oxyde de sodium ou de potassium.

6. Procédé suivant la revendication 1 ou la revendication 2, dans lequel le sel de sodium ou de potassium est l'un au moins de sels choisis entre un halogénure de sodium ou de potassium ou des fluorures complexes de sodium ou de potassium.

7. Procédé suivant l'une quelconque des revendications précédentes, dans lequel l'oxyde de calcium ou l'oxyde de magnésium ou les deux sont utilisés conjointement avec les sels de sodium ou de potassium.

8. Procédé suivant l'une quelconque des revendications précédentes, qui est mis en oeuvre à une température comprise entre 730 et 800°C.

9. Procédé suivant l'une quelconque des revendications précédentes, dans lequel le silicium est sous la forme de silicium élémentaire.

10. Procédé suivant l'une quelconque des revendications 1 à 8, dans lequel le silicium est présent sous la forme d'un alliage de silicium.